# DEMANDE DE BREVET EUROPEEN

(11) **EP 1 566 721 A1**
(43) Date de publication de la demande: **24.08.2005**
(21) Numéro de dépôt: 05290303.6
(22) Date de dépôt: 10.02.2005
(51) Int. Cl.: G06F 1/00, G06F 9/00

(54) **Procédé et dispositif de transformation d'un système d'exploitation contre des intrusions non autorisées**

(30) Priorité: 18.02.2004 FR 0450299
(71) Demandeur: ALCATEL, 75008 Paris (FR)
(72) Inventeur: Helou, Didier, 78210 Saint Cyr l'Ecole (FR)
(74) Mandataire: Chaffraix, Sylvain

(57) **Abrégé**

Un dispositif (D) est dédié à la transformation d'un système d'exploitation (OS), éventuellement au sein d'un équipement (PC). Ce dispositif (D) comprend des moyens de traitement (MT) chargés de brouiller l'un au moins des outil(s)-support(s) de programmation (Fst, Fct) du système d'exploitation (OS) par insertion dans sa définition d'au moins un paramètre de brouillage.

## Description

L'invention concerne le domaine des équipements gérés par un système d'exploitation et un ou plusieurs programmes informatiques compilés avec ce système d'exploitation.

On entend ici par « équipement » tout type de matériel contrôlable au moyen de programmes compilés, et notamment les ordinateurs, fixes ou portables, les stations de travail, les équipements de réseau, tels que les serveurs ou les routeurs, et les terminaux de communication, fixes ou mobiles, y compris ceux de type multimédia, comme par exemple les téléphones et les assistants personnels numériques (ou PDA).

La quasi totalité des programmes informatiques, voire même des logiciels, compilés à l'aide d'un système d'exploitation (ou OS pour « Operating System »), quel qu'il soit, peut faire l'objet d'une intrusion externe au moyen d'un ou plusieurs programmes, généralement appelés « binaires » du fait qu'ils sont constitués de codes binaires.

Ces binaires sont fréquemment classés au sein de familles, telles que les vers, les virus, les chevaux de Troie ou les espions ou mouchards, selon leur mode d'action. Ils permettent à leurs concepteurs de récupérer au sein d'un équipement des informations stockées ou saisies en temps réel, ou de contrôler un équipement à distance, ou de détruire des données ou des morceaux de programmes ou logiciels internes stockés dans un équipement (y compris ceux constituant l'OS), ou encore de contraindre des programmes ou logiciels internes, stockés dans un équipement, à exécuter des codes binaires non autorisés, par exemple pour les contraindre à effectuer des démonstrations ou les soumettre à des tests.

Ces binaires profitent de défauts de sécurité que présentent les programmes internes. Il est certes possible de remédier à ces défauts au moyen de programmes (ou « patches ») correctifs, cependant, le temps nécessaire au développement d'un programme correctif, dédié à un binaire, et à l'exécution de tests dits de régression est rarement inférieur à une semaine, ce qui permet au binaire de continuer d'opérer, et peut permettre à d'autres binaires d'opérer librement. En outre, l'ajout d'un programme correctif peut parfois perturber, voire empêcher, le fonctionnement d'applications.

Par ailleurs, certains programmes ou logiciels internes peuvent créer de façon non intentionnelle des portes d'accès (ou « security hole ») pour des binaires externes, ou bien supprimer des portes de sécurité initialement destinées à bloquer des binaires externes, dans des programmes ou logiciels internes avec lesquels ils coopèrent. Cela peut rendre impossible la restauration de certains fichiers d'installation, et par conséquent imposer une restauration complète d'une installation informatique.

L'invention a donc pour but d'améliorer la situation.

Elle propose à cet effet un procédé de protection d'un programme informatique interne contre des intrusions extérieures effectuées au moyen d'au moins un programme informatique externe. Ce programme informatique interne fonctionne sur un équipement muni d'un système d'exploitation. Le procédé se caractérise en ce qu'il consiste à brouiller le système d'exploitation puis à compiler le programme interne avec le système d'exploitation brouillé.

Pour brouiller le système d'exploitation, préférentiellement on le transforme par un brouillage de l'un au moins de ses outil(s)-support(s) de programmation consistant en une insertion dans sa définition d'au moins un paramètre de brouillage.

De préférence, on brouille tous les outif(s)-support(s) de programmation. En outre, lorsque chaque outil-support est défini par un multiplet comportant des paramètres ou des variables (associés à un type), il est également préférable d'insérer un paramètre de brouillage avant ou après chaque paramètre ou variable d'un multiplet.

Le brouillage peut également consister à permuter au moins deux variables ou paramètres, et de préférence tou(te)s, de l'un au moins desdits multiplets, et de préférence tous, en complément de l'insertion de paramètre(s) de brouillage.

Le brouillage peut être effectué en fonction d'une loi choisie, de préférence variable, par exemple de façon pseudo-aléatoire.

Les outil(s)-support(s) de programmation sont préférentiellement choisis parmi des prototypes de fonction (ou « function prototypes ») et des fichiers inclus internes (ou « internal include files ») définissant chacun une structure.

Par exemple, chaque prototype de fonction brouillé (Fct) peut être défini par un multiplet se présentant sous la forme « Fct(typei Pi,[type Dummyi,] typej Pj,[type Dummyj,]... typer Pr,[type Dummyr]) », où « typei » est le type i du paramètre d'appel Pi de la fonction concernée, et « Dummyi » représente un ou plusieurs paramètres de brouillage insérés, associés au paramètre d'appel Pi. De même, chaque fichier inclus interne brouillé (Fst) peut être défini par un multiplet se présentant sous la forme Fst{typei Di,[type Dummyi;] typej Dj,[type Dummyj;]... typer Dr,[type Dummyr]}, où « typei » est le type i de la variable Di de la structure concernée, et « Dummyi » représente un ou plusieurs paramètres de brouillage insérés, associés à la variable Di.

L'invention propose également un dispositif informatique dédié à protection d'un programme informatique et comprenant des moyens de traitement chargés de mettre en oeuvre un procédé du type de celui présenté ci-avant.

L'invention est particulièrement bien adaptée, bien que de façon non exclusive, au brouillage de systèmes d'exploitation tels que ceux connus sous les noms « LINUX », « BSD », « Solaris », « Tru64 » et « WINDOWS » (marques déposées).

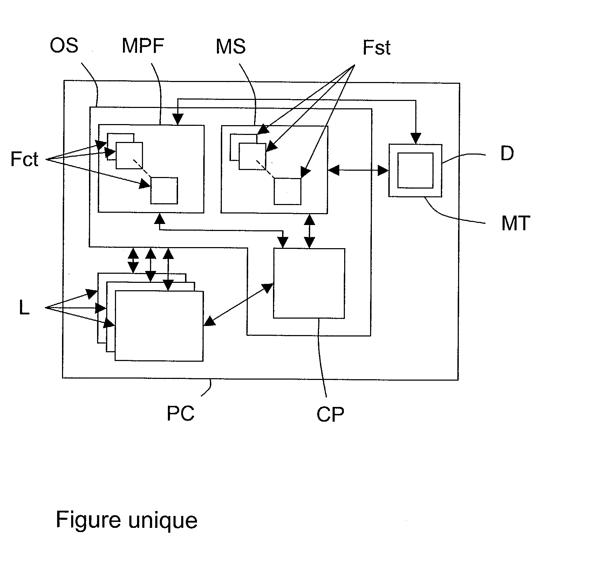

D'autres caractéristiques et avantages de l'invention apparaîtront à l'examen de la description détaillée ci-après, et du dessin annexé, sur lequel l'unique figure illustre de façon très schématique un exemple d'ordinateur équipé d'un dispositif de transformation selon l'invention. Le dessin annexé pourra non seulement servir à compléter l'invention, mais aussi contribuer à sa définition, le cas échéant.

L'invention a pour objet de permettre la protection de programmes informatiques (ou logiciels) contre des intrusions externes effectuées à l'aide d'autres programmes informatiques, comme par exemple des binaires.

Cette invention concerne tout type de programme informatique dès lors que le programme doit faire l'objet d'une compilation à l'aide d'un compilateur, faisant partie d'un système d'exploitation ou OS (pour « Operating System »), pour fonctionner au sein d'un équipement. Par ailleurs, l'invention concerne tout type de système d'exploitation, qu'il soit de type monotâche ou multitâches, et notamment ceux appelés « UNIX », « LINUX », « BSD », « Solaris », « Tru64 », « OS/2 », « BeOS », « MS-DOS », « WINDOWS » et « OS MAC » (marques déposées).

On considère dans ce qui suit que le système d'exploitation est LINUX et qu'il est implanté dans un ordinateur, fixe ou portable. Bien entendu, il pourrait être implanté, ou destiné à être implanté, dans tout autre type d'équipement contrôlé au moins partiellement par des programmes informatiques compilés, et notamment dans une station de travail ou un équipement de réseau, tel qu'un serveur ou un routeur, ou bien dans un terminal de communication, fixe ou mobile, éventuellement de type multimédia, tel qu'un téléphone ou un assistant personnel numérique (ou PDA).

Comme cela est illustré sur l'unique figure, un ordinateur PC comporte habituellement un système d'exploitation OS couplé à un ou plusieurs programmes informatiques ou logiciels applicatifs L dédiés, par exemple, à la messagerie (pour l'émission et la réception de courriers électroniques), ou à l'accès à un réseau (privé ou public, tel qu'Internet), ou au traitement de texte ou de photos, ou à la lecture et/ou l'enregistrement de données numériques, ou à des jeux, ou encore à la simulation numérique.

Un système d'exploitation OS est un logiciel chargé de contrôler le fonctionnement d'un ordinateur PC, et notamment de gérer l'allocation et l'utilisation de ressources matérielles, comme par exemple la mémoire, l'unité centrale de traitement (ou CPU), l'espace du disque dur et les périphériques. Il sert en outre d'interface de commande avec l'ordinateur PC et notamment avec les logiciels applicatifs L qu'il contient.

De façon très simplifiée, un système d'exploitation OS comprend au moins un premier module MPF, comportant un premier type d'outil-support de programmation Fct, un second module MS, comportant un second type d'outil-support de programmation Fst, et un compilateur CP chargé de compiler des programmes ou logiciels internes L à l'aide des outils-supports des premier MPF et second MS modules afin qu'ils puissent fonctionner au sein de l'ordinateur PC.

On entend ici par « outil-support du premier type » ce que l'homme de l'art appelle habituellement un prototype de fonction Fct. Un tel prototype de fonction Fct constitue une description sémantique d'une fonction de programmation et définit fréquemment une interface de programmation d'application (ou API pour « Application Programming Interface »). Il est habituellement défini par un multiplet désigné par un nom et se présentant sous la forme Fct(type1 P1, type2 P2,..., typen Pn), où « typei » est le type i (i = 1 à n, où n varie selon la fonction) d'un paramètre d'appel Pi de la fonction concernée. Il existe généralement huit types différents : quatre scalaires (booléen, entier, nombre à virgule flottante, et chaîne de caractères), deux composés (tableau et objet), et deux spéciaux (ressource et Null). On peut également prévoir des types mixtes pour les paramètres d'appel Pi pouvant posséder des types différents.

On peut citer à titre d'exemple les fonctions Noyau (ou « Kernel »), Bibliothèque (ou « Library »), Pilote (ou « Driver »), et Application. Un exemple illustratif de fonction Kernel est donné ci-dessous, en langue anglaise, avec des commentaires en français :

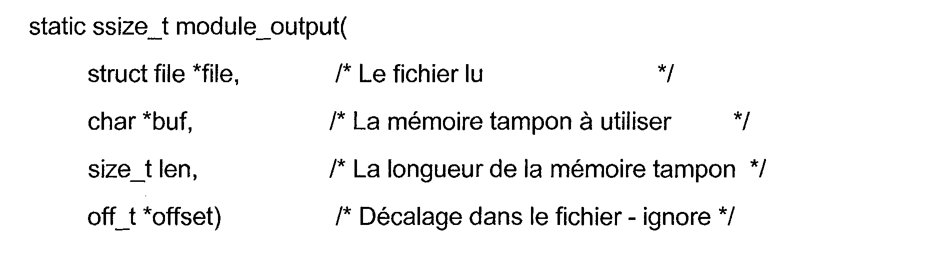

Par ailleurs, on entend ici par « outil-support du second type » ce que l'homme de l'art appelle habituellement un fichier inclus interne (ou « internal include file ») Fst. Un tel fichier inclus interne Fst constitue une description sémantique d'une structure de programmation utilisée dans un programme. Il est habituellement défini par un multiplet désigné par un nom et se présentant sous la forme Fst{type1 D1; type2 D2;... ; typem Dm}, où « typei » est le type i (i = 1 à m, où m varie selon la structure) d'une variable Di de la structure concernée. Les types sont généralement les mêmes que ceux utilisés pour les prototypes de fonction Fct.

Généralement, on appelle une fonction avec une structure associée. Un exemple illustratif de structure faisant appel à plusieurs variables Di est donné ci-dessous, en langue anglaise, avec des commentaires en français :

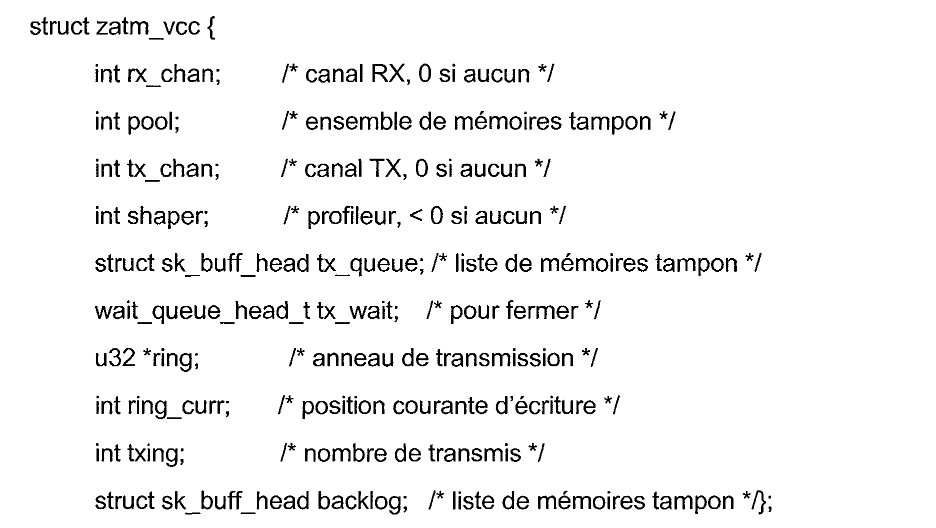

Afin de protéger les programmes informatiques (ou logiciels) contre des intrusions externes effectuées à l'aide d'autres programmes informatiques, comme par exemple des binaires, l'invention propose de les compiler avec un compilateur CP traditionnel, une fois que le système d'exploitation OS a été brouillé (ou « scrambled »).

Le brouillage du système d'exploitation OS (par exemple celui appelé « LINUX » (marque déposée)), selon l'invention, consiste au minimum à insérer au moins un paramètre de brouillage factice dans la définition de l'un au moins de ses outil(s)-support(s) de programmation appartenant aux premier Fct et second Fst types.

L'insertion a pour objet de décaler l'ordre des paramètres dans la pile (ou « stack ») où ils sont stockés. Ainsi, un binaire externe, qui n'a pas été compilé avec le même système d'exploitation OS que le logiciel interne qu'il « attaque », va recevoir des codes d'erreur en réponse à ses requêtes ou va être inutilisable très rapidement (entraînant ainsi un « crash » de l'application).

La protection conférée par le brouillage, à un logiciel (ou programme) compilé à l'aide d'un système d'exploitation brouillé, est cependant d'autant plus efficace que le nombre d'outils-supports brouillés est élevé. En d'autres termes, il est préférable de brouiller tous les outils-supports des premier et second types, c'est-à-dire tous les prototypes de fonction Fct et tous les fichiers inclus internes Fst.

Le brouillage peut consister à insérer un ou plusieurs paramètres de brouillage « Dummyi » avant ou après l'un au moins des paramètres d'appel Pi ou l'une au moins des variables Di. Un paramètre de brouillage Dummyi peut être sélectionné en fonction d'une loi, qui peut varier d'un système d'exploitation à l'autre, et éventuellement d'un outil-support Fct du premier type à un outil-support Fst du second type. Préférentiellement, la loi varie de façon pseudo-aléatoire.

Par ailleurs, un paramètre de brouillage Dummyi peut être de type variable. Il peut être, par exemple, constitué d'un ou plusieurs octets, voire même d'une suite d'octets.

En outre, la protection est encore plus efficace lorsque l'on insère un paramètre de brouillage devant ou derrière chaque paramètre Pi ou variable Di d'un multiplet définissant une fonction ou une structure. Un tel brouillage aboutit alors aux définitions brouillées suivantes, respectivement pour chaque prototype de fonction Fct et chaque fichier inclus interne Fst, et lorsqu'il est appliqué après les paramètres d'appel Pi ou les variables Di :
- Fct(type1 P1, [type Dummy1,] type2 P2,[type Dummy2,]..., typen Pn, [type Dummyn])
- Fst{type1 D1; [type Dummy1;] type2 D2; [type Dummy2;]... ; typem Dm; [type Dummym]}

En variante, lorsque le brouillage est appliqué avant les paramètres d'appel Pi ou les variables Di, on obtient les définitions brouillées suivantes :
- Fct([type Dummy1,] type1 P1, [type Dummy2,] type2 P2, ... , [type Dummyn,] typen Pn)
- Fst{[type Dummy1;] type1 D1; [type Dummy2;] type2 D2; ... ; [type Dummym;] typem Dm}

Dans cet exemple de brouillage, les différents paramètres de brouillage Dummyi peuvent être sélectionnés en fonction d'une loi, qui peut varier d'un système d'exploitation à l'autre, et éventuellement d'un outil-support Fct du premier type à un outil-support Fst du second type. Préférentiellement, la loi varie de façon pseudo-aléatoire.

La protection peut être encore plus efficace si le brouillage consiste non seulement en une insertion d'un ou plusieurs paramètres de brouillage mais également en une permutation d'au moins deux paramètres d'appel Pi, Pj ou variables Di, Dj au sein d'un ou plusieurs multiplets de définition, et de préférence dans chaque multiplet de définition.

L'efficacité de protection optimale est obtenue lorsque l'on permute tous les paramètres d'appel Pi et toutes les variables Di au sein de chaque multiplet de définition de fonction et de structure. Un tel brouillage aboutit alors aux définitions brouillées suivantes, respectivement pour chaque prototype de fonction Fct et chaque fichier inclus interne Fst, et lorsqu'il est appliqué après les paramètres d'appel Pi ou les variables Di :
- Fct(typei Pi, [type Dummyi,] typej Pj,[type Dummyj,]..., typer Pr, [type Dummyr])
- Fst{typej Dj; [type Dummyj;] typer Dr; [type Dummyr;]... ; typei Di; [type Dummyi]}

En variante, lorsque le brouillage est appliqué avant les paramètres d'appel Pi ou les variables Di, on obtient les définitions brouillées suivantes :
- Fct([type Dummyi,] typei Pi, [type Dummyj,] typej Pj, ... , [type Dummyr,] typer Pr)
- Fst{[type Dummyj;] typej Dj; [type Dummyr;] typer Dr; ... ; [type Dummyi;] typei Di}

Dans cet exemple de brouillage, les permutations, ainsi qu'éventuellement les différents paramètres de brouillage Dummyi, peuvent être sélectionnés en fonction d'une loi, qui peut varier d'un système d'exploitation à l'autre, et éventuellement d'un outil-support Fct du premier type à un outil-support Fst du second type. Préférentiellement, la loi varie de façon pseudo-aléatoire.

Une fois qu'un système d'exploitation OS a été brouillé, conformément à l'invention, il peut être utilisé pour protéger un programme informatique contre des intrusions extérieures. Pour ce faire, il suffit en effet de compiler le programme informatique avec le compilateur CP du système d'exploitation OS brouillé, puisque ce compilateur CP va utiliser ses outils-supports brouillés.

Comme indiqué précédemment, un binaire externe, qui n'a pas été compilé avec le même système d'exploitation OS que le logiciel qu'il « attaque », va recevoir des codes d'erreur en réponse à ses requêtes ou va être inutilisable très rapidement. Certes, un binaire qui ne ferait pas appel aux APIs du système d'exploitation brouillé pourrait s'introduire dans un programme protégé selon l'invention, mais ses actions seraient alors très réduites, notamment le rapatriement de données via internet serait très difficile à mettre en oeuvre puisque les fonctions standard TCP/IP seraient inutilisables.

On peut mettre en oeuvre le brouillage à l'aide d'un dispositif de protection D, selon l'invention. Un tel dispositif D n'a besoin que d'un module de traitement MT chargé de brouiller un ou plusieurs outils-supports, par insertion de paramètre(s) de brouillage et éventuellement permutation(s) de paramètres d'appel ou de variables. Pour ce faire, le module de traitement MT doit disposer d'un ensemble de paramètres de brouillage, stockés dans une mémoire dédiée (par exemple sous la forme d'une table ou de fichier(s)), et éventuellement d'une loi, comme décrit précédemment, selon sa configuration.

Ce dispositif de traitement D, et notamment son module de traitement MT, peuvent être réalisés sous la forme de circuits électroniques, de modules logiciels (ou informatiques), ou d'une combinaison de circuits et de logiciels.

Un tel dispositif D peut soit être intégré à l'intérieur d'un équipement, comme illustré sur l'unique figure, soit se présenter sous la forme d'un boîtier externe, de type périphérique, que l'on raccorde à un équipement, soit encore se présenter sous la forme d'un logiciel de transformation stocké sur un support de mémorisation, comme par exemple un cédérom, un disque magnéto-optique, ou tout autre type de mémoire amovible. Mais, il peut être également implanté dans un accessoire dédié exclusivement à la transformation par brouillage de systèmes d'exploitation, indépendant des équipements devant être équipés desdits systèmes d'exploitation brouillés. Un tel accessoire peut être également agencé de manière à permettre la compilation de logiciels (ou programmes) destinés à fonctionner avec un système d'exploitation qu'il a précédemment brouillé.

Grâce à l'invention, les logiciels compilés avec un système d'exploitation brouillé sont protégés contre les intrusions reposant sur des appels aux APIs de ce système d'exploitation.

Par ailleurs, seul un logiciel interne ayant été compilé avec un système d'exploitation brouillé peut désormais utiliser un autre logiciel interne compilé avec ce même système d'exploitation brouillé.

En outre, l'invention permet de s'affranchir des programmes (ou « patches ») correctifs et des tests de régression associés. Cela permet de réduire les coûts de développement et d'installation, de s'affranchir des adaptations indispensables en cas de modification d'un logiciel, et de ne pas laisser les logiciels en proie aux intrusions pendant les phases de développement et de tests des programmes correctifs.

De plus, l'invention permet de protéger, contre les intrusions, des logiciels comportant d'origine des défauts de sécurité.

L'invention ne se limite pas aux modes de réalisation de dispositif de traitement, de procédé de transformation et de procédé de protection décrits ci-avant, seulement à titre d'exemple, mais elle englobe toutes les variantes que pourra envisager l'homme de l'art dans le cadre des revendications ci-après.

## Revendications

1. Procédé de protection d'un programme informatique interne (L) contre des intrusions extérieures effectuées au moyen d'au moins un programme informatique externe, ledit programme informatique interne fonctionnant sur un équipement muni d'un système d'exploitation (OS), **caractérisé en ce qu'**il consiste à brouiller ledit système d'exploitation (OS) puis à compiler ledit programme interne (L) avec le système d'exploitation (OS) brouillé.

2. Procédé de protection selon la revendication 1, dans lequel, ledit système d'exploitation informatique (OS) comportant des outil(s)-support(s) de programmation (Fst, Fct) munis chacun d'une définition, on brouille ledit système d'exploitation en brouillant l'un au moins desdits outil(s)-support(s) de programmation dudit système d'exploitation par insertion dans sa définition d'au moins un paramètre de brouillage.

3. Procédé selon la revendication 2, **caractérisé en ce que** chaque outil-support (Fst, Fct) étant défini par un multiplet comportant des paramètres ou variables, on insère un paramètre de brouillage après chaque paramètre ou variable d'un multiplet.

4. Procédé selon la revendication 2, **caractérisé en ce que** chaque outil-support (Fst, Fct) étant défini par un multiplet comportant des paramètres ou variables, on insère un paramètre de brouillage avant chaque paramètre ou variable d'un multiplet.

5. Procédé selon l'une des revendications 2 à 4, **caractérisé en ce que** chaque outil-support (Fst, Fct) étant défini par un multiplet comportant des paramètres ou variables, on complète ledit brouillage en permutant au moins deux paramètres ou variables de l'un au moins desdits multiplets.

6. Procédé selon la revendication 5, **caractérisé en ce que** l'on permute tous lesdits paramètres ou toutes lesdites variables de l'un au moins desdits multiplets.

7. Procédé selon l'une des revendications 1 à 6, **caractérisé en ce que** l'on procède au brouillage en fonction d'une loi choisie.

8. Procédé selon la revendication 7, **caractérisé en ce que** ladite loi est variable.

9. Procédé selon la revendication 7, **caractérisé en ce que** ladite loi est de type pseudo-aléatoire.

10. Procédé selon la revendication 2 à 9, **caractérisé en ce que** l'on procède au brouillage de tous lesdits outil(s)-support(s) (Fst, Fct).

11. Procédé selon la revendication 2 à 10, **caractérisé en ce que** lesdits outil(s)-support(s) (Fst, Fct) sont choisis parmi des prototypes de fonction (Fct) et des fichiers inclus internes (Fst) définissant des structures.

12. Procédé selon l'une des revendications 2 à 10 en combinaison avec la revendication 11, **caractérisé en ce que** chaque prototype de fonction brouillé (Fct) est défini par un multiplet se présentant sous la forme « Fct(typei Pi,[type Dummyi,] typej Pj,[type Dummyj,]... typer Pr,[type Dummyr]) », où « typei » est le type i d'un paramètre d'appel Pi de la fonction concernée, et « Dummyi » représente au moins un paramètre de brouillage inséré, associé audit paramètre d'appel Pi.

13. Procédé selon la revendication 2 à 10 en combinaison avec l'une des revendications 11 ou 12, **caractérisé en ce que** chaque fichier inclus interne brouillé (Fst) est défini par un multiplet se présentant sous la forme Fst{typei Di;[type Dummyi;] typej Dj;[type Dummyj;]... typer Dr,[type Dummyr]}, où « typei » est le type i d'une variable Di de la structure concernée, et « Dummyi » représente au moins un paramètre de brouillage inséré, associé à ladite variable Di.

14. Dispositif informatique (D), **caractérisé en ce qu'**il comprend des moyens de traitement (MT) agencés pour mettre en oeuvre un procédé de protection de programme informatique interne (L) selon l'une des revendications 1 à 13.
